# EUROPÄISCHE PATENTANMELDUNG

(11) **EP 2 604 581 A1**
(43) Veröffentlichungstag der Anmeldung: **19.06.2013**
(21) Anmeldenummer: 12197292.1
(22) Anmeldetag: 14.12.2012
(51) Int. Cl.: C03B 3/02

(54) **Enteisungsvorrichtung sowie Glasschmelzofen mit einer solchen**

(30) Priorität: 14.12.2011 DE 102011088618
(71) Anmelder: Interprojekt GmbH, 45327 Essen (DE)
(72) Erfinder: Baberkov, Dr.-Ing. Boris, 45133 Essen (DE)
(74) Vertreter: Gille Hrabal

(57) **Zusammenfassung**

Erfindungsgemäß wurde zunächst erkannt, dass eine Enteisungsvorrichtung für ein Silo für Scherben, dessen Fußbereich mit einer Glasfördereinrichtung zum Zuführen der im Fußbereich befindlichen Scherben zu einer Glasschmelzwanne verbunden ist, einfacher und effektiver betrieben werden kann, wenn die Enteisungsvorrichtung derart ausgestaltet ist, dass sie einen Raum angrenzend an die Glasschmelzwanne mit dem Silo für Scherben verbinden kann, derart, dass die oberhalb der Glasschmelzwanne befindliche erwärmte Luft in das Silo zwischen die Scherben mit dem anhaftenden, insbesondere gefrorenen, Wasser geleitet werden kann, um dieses Wasser zu erwärmen, insbesondere teilweise oder vonständig zu schmetzen. Dadurch wird die ohnehin vorhandene, circa 80°C heiße Luft im Bereich oberhalb des geschmolzenen Glases genutzt, um das im Silo an den Scherben haftende Eis zu schmelzen, Diese heiße Luft wird bislang ungenutzt abgeführt durch eine Öffnung im Dach oberhalb der Glasschmelzwanne,

## Beschreibung

Die Erfindung betrifft eine Enteisungsvorrichtung sowie einen Glasschmelzofen mit einer solchen gemäß Oberbegriff der unabhängigen Ansprüche, insbesondere betrifft die Erfindung eine solche für Scherben die mittels eines Einiegegutvorwärmers oder direkt einer Glasschmelzwanne zugeführt werden.

Enteisungsvorrichtungen sind bei Glasschmelzöfen notwendig, um im Winter das üblicherweise unter freiem Himmel bei Frostbedingungen gelagerte Scherben oder Altglas von Eis und Schnee zu befreien, Eis und Schnee führen beim direkten Einlegen der vereisten Scherben in die Glasschmelzwanne unter Umständen zu Vereisung des Einlegers und/oder bei Betrieb eines Einlegegutvorwärmers zu dessen Verstopfung, Der Einleger ist eine Fördervorrichtung, die das Glas portionsweise unmittelbar in die Glasschmelzwanne fördert.

Die für das Einschmelzen in einer Glasschmelzwanne benutzten Scherben werden üblicherweise unter freiem Himmel auf einer Halde gelagert und sind somit allen Umwelteinflüssen ausgesetzt. Die Scherben werden üblicherweise mittelt Radladern einem Brecher zugeführt - auch um gegebenenfalls durch Eis verursachte Klumpen zu brechen. Von dort werden sie mittels Transportband und Becherwerk in das Scherbensilo im Gemengehaus eingebracht, Scherben aus dem Scherbensilo werden je nach Bedarf mit frischem Gemenge gemischt und mittels Einleger der Glasschmelzwanne direkt zugeführt oder sie werden einem Einlegegutvorwärmer zugeführt, wo sie mit dem frischen Gemenge mittels Rauchgas aufgeheizt werden und so den Energieverbrauch der Glasschmelzwanne senken.

Im Winter gelangen auf diese Weise unter Umständen große Mengen an Eis und Schnee in das Scherbensilo, Da ein Gemengehaus üblicherweise nicht beheizt wird, werden Eis und Schnee im Scherbensilo nicht auftauen und als Wasser austreten, Werden die Scherben mit einem hohen Anteil an Eis, gemischt mit frischem Gemenge dem Einleger einer Glasschmelzwanne zugeführt, kann es in diesen Bereich zum Einfrieren des Einlegers kommen.

Dieses Einfrieren des Einlegers gefährdet die sichere Funktion der Glasschmelzwanne und muss mit größerem personellem Aufwand behoben werden, was zu zusätzlichen Kosten führt,

Werden die Scherben mit einem hohen Anteil an Eis, gemischt mit frischem Gemenge dem Einlegegutvorwärmer einer Glasschmelzwanne zugeführt, wird das Eis tauen und das freiwerdende Wasser führt unter anderem durch chemische Reaktionen zum Verstopfen des Einlegegutvorwärmers. Dieser kann dann nicht funktionsgerecht betrieben werden, die eingeplante Energieersparnis kann nicht realisiert werden und die Verstopfung muss mit größerem personellem Aufwand beseitigt werden.

Demzufolge ist es Aufgabe der Erfindung, eine verbesserte Enteisungsvorrichtung sowie Glasschmelzofen mit einer solchen, bereitzustellen, die die oben genannten Nachteile vermeidet,

Diese Aufgabe wird gelöst durch eine Enteisungsvorrichtung sowie einen Glasschmelzofen mit einer solchen mit den Merkmalen der entsprechenden unabhängigen Ansprüche. Vorteilhafte Ausgestaltungen sind Gegenstand der Unteransprüche,

Erfindungsgemäß wurde zunächst erkannt, dass eine Enteisungsvorrichtung für ein Silo für Scherben, dessen Fußbereich mit einer Glasfördereinrichtung zum Zuführen des im Fußbereich befindlichen Scherben zu einer Glasschmelzwanne verbunden ist, einfacher und effektiver betrieben werden kann, wenn die Enteisungsvorrichtung derart ausgestaltet ist, dass sie einen Raum angrenzend an die Glasschmelzwanne mit dem Silo für Scherben verbinden kann, derart, dass die angrenzend an die Glasschmelzwanne befindliche erwärmte Luft in das Silo zwischen die Scherben mit dem anhaftenden Eis, insbesondere gefrorenen, Wasser geleitet werden kann, um dieses Wasser zu erwärmen, insbesondere teilweise oder vollständig zu schmelzen, Dadurch wird die ohnehin vorhandene, circa 80° C heiße Luft im Bereich angrenzend an die Glasschmelzwanne genutzt, um das im Silo an den Scherben haftende Eis zu schmelzen. Diese heiße Luft wird bislang ungenutzt abgeführt, z. B. als Strahlungswärme oder durch eine Öffnung im Dach oberhalb der Glasschmelzwanne. Durch die erfindungsgemäße Nutzung der heißen Luft erhöht sich der Energiebedarf in der Glasschmelzwanne nicht, da im Raum angrenzend an die Glasschmelzwanne ohnehin eine Konvektion stattfindet, bei der ständig Frischluft dem Raum zugeführt wird und sich eine Gleichgewichtstemperatur der Luft von circa 80 ° C einstellt, Vielmehr sinkt durch das Vorwärmen der Scherben der Gesamtenergiebedarf.

Eine Glasschmelzwanne ist in der Regel von einem Raum umgeben, der sich unterhalb, seitlich und/oder oberhalb der Glasschmelzwanne erstreckt, Die darin befindliche Warmluft wird erfindungsgemäß "angezapft". Der saum muss nicht zwingend abgeschlossen sein. Es ist ausreichend, die die Glasschmelzwanne umgebende heiße Luft als Raum zu verstehen.

Die Enteisungsvorrlchtung für Scherben zum Einlegen in einen Glasschmelzofen mit und ohne Einlegegutvorwärmer erwärmt die im Scherbensito befindlichen Scherben, damit Eis und Schnee auftauen und das entstehende Wasser aus dem Scherbensilo ausgeschleust werden kann. Die dazu benötigte Energie wird hier nicht zusätzlich aufgebracht, sondern dem ohnehin in hohen Energleverlust beim Glasschmelzprozess entnommen.

In der Wannenhalle, also dem Raum angrenzend an den Glasschmelzofen, treten ohnehin Temperaturen von 80°C und mehr auf. Diese Energie, die sonst als ungenutzte Abluft die Wannenhalle nach oben vertässt, wird erfindungsgemäß für eine Enteisungsvorrichtung für Scherben zum Einlegen in einen Glasschmelzofen mit und ohne Einlegegutvorwärmer genutzt.

Die Erwärmung der im Silo befindlichen Scherben verursacht vernachlössigbare zusätzliche Kosten für ein Leitungssystem mit Ventilator, benötigt aber keinerlei Heizenergie. Es wird lediglich die ohnehin nutzlos abgeführte Raumluft angrenzend an die Glasschmeizewanne genutzt. Unter Frostbedingungen entfällt das mechanische Zerkleinern der Klumpen aus vereisten Scherben beziehungsweise das Erwärmen derselben. Die Scherben bleiben rieselfähig und können aus dem Silo problemlos automatisiert weitergefördert werden. Darüber hinaus kann das erschmolzene Wasser nach unten hin aus dem Silo abfließen und muss somit nicht mehr erwärmt werden, sei es im Vorwärmer oder in der Glasschmelzwanne. Schließlich werden auch die Scherben erwärmt. Die Erfindung, also die Entetsungsvorrichtung, kann aber auch unter Nicht-Frostbedingungen wirkungsgraderhöhend eingesetzt werden, was erfindungsgemäß ausdrücklich mitbeansprucht wird: Durch Erwärmung der Scherben im Silo, muss den Scherben später weniger Energie zugeführt werden. Wasser, z. B, Niederschlagswasser, welches an den Scherben anhaftet, wird zumindest erwärmt, verdampft oder verdunstet durch den heißen Luftstrom im Silo. Dieses Wasser muss später nicht mehr erwärmt werden.

Vorzugsweise ist die Enteisungsvorrichtung derart ausgebildet, dass sie mit einem Luftauslass des Raumes, insbesondere im Dach einer Abzugshaube, welche oberhalb der Glasschmelzwanne angeordnet ist, verbunden werden kann.

Die Erfindung umfasst ebenfalls einen kompletten Glasschmelzofen mit einer solchen Enteisungsvorrichtung. Ein Glasschmelzofen im Sinn der Erfindung umfasst eine Glasschmelzwanne zum Schmelzen von Scherben, ein Silo für Scherben, dessen Fußbereich mit einer Glasfördereinrichtung zum Zuführen der im Fußbereich befindlichen Scherben zu der Glasschmelzwanne verbunden ist, wobei vorzugsweise der Fußbereich einen Wasserseparator zum Abführen von mit den Scherben dem Silo zugeführtem Wasser von dem der Glasschmelzwanne zugeführten Scherben aufweist, wobei das Silo eine Enteisungseinrichtung zum Erwärmen, insbesondere Auftauen, von an den Scherben im Silo anhaftenden Wasser, insbesondere gefrorenem Wasser aufweist.

Vorzugsweise umfasst der Ofen oder die Enteisungsvorrichtung einen Ventilator, mittels welchem die durch die Enteisungsvorrichtung geleitete erwärmte Luft in dem Silo zwischen den darin befindlichen Scherben mit dem anhaftenden Wasser gedrückt werden kann, um den notwendigen Druck aufzubauen, der erforderlich ist, um die erwärmte Luft durch die in dem Silo aufgehäuften Scherben zu drücken. Durch Variation der Ventliatorleistung lässt sich ferner die Temperatur im Raum oberhalb der Glasschmelze sowie die dem Vorratssilo zugeführtem Wärme regulieren. Je nach Beschaffenheit der Scherben und dem Höhenunterschied kann auch über eine ausschließlich oder zumindest teilweise auf Konvektion beruhende wie Lüftung des Silos nachgedacht werden.

Vorzugsweise umfasst die Enteisungsvorrichtung einen Wärmetauscher, mittels welchem die durch die Enteisungsvorrichtung geleitete Luft gekühlt oder zusätzlich erwärmt werden kann. Durch den Wärmetauscher kann die Enteisungsvorrichtung flexibler eingesetzt werden. Eine Kühlung der durch die Enteisungsvorrichtungen geleitete Luft ist eigentlich nicht nötig, allerdings kann die somit abgeführte Wärme für andere Zwecke, z. B. Fernwärme oder dergleichen, eingesetzt werden. Eine zusätzliche Erwärmung der durch die Enteisungsvorrichtung geleitete Luft mittels des Wärmetauscher kann zweckmäßig sein, wenn der Raum angrenzend an die Glasschmelzwanne nicht ausreichend Wärme lietert.

Zweckmäßigerwetse umfasst die Enteisungsvorrichtung Zuleitungen, deren Ausblasöffnungen in das innere des Silos weisen, damit die heiße Luft den Scherben zugeführt werden kann. Die Zuleitungen können beispielsweise außerhalb oder am Rand des Silos angeordnet und befestigt sein und sind somit gegen mechanische Einwirkung durch das Schüttgut geschützt.

Vorzugsweise ragen die Zuleitungen in das Silo oder verlaufen quer durch das Silo, damit die erwärmte Luft möglichst an alle Bereiche des Schüttgut herangeführt werden kann. Dabei können die Zuleitungen auch gitterartig in einer Ebene, übereinander oder diagonal, insbesondere auch schräg zueinander versetzt, verlaufen. Aus strömungstechnischen Gründen verlaufen dabei vorzugsweise die Zuleitungen im inneren des Silos im wesentlichen horizontal,

Vorzugsweise sind die Ausblasöffnungen in den Zuleitungen als Düsen, Schlitze, insbesondere nach unten weisend, ausgebildet. Die dadurch verursachte erhöhte Strömungsgeschwindigkeit ermöglicht eine bessere Durchdringung des Schüttguts, ebenso wie das vorzugsweise Ausblasen nach unten.

In einer baulich besonders einfachen und preiswerten Ausgestaltung sind die Zuleitungen als nach unten offenes dachartiges Profil ausgebildet. Dieses verläuft durch die Scherben und bildet daher zusammen mit den im Silo befindlichen Scherben eine teilweise druckdichte Führung für die erwärmte Luft, aus welcher ein Teil der erwärmten Luft in die im Silo befindlichen Scherben strömen kann. Bei dieser Ausgestaltung können aus Ausblasschlitze bzw. -öffnungen nicht verstopfen bzw. durch Scherben versperrt werden und die erwärmte Luft verfügt über mehr Möglichkeiten, sich seinen Weg durch die Scherben zu suchen, Durch diese Anordnung entweicht die erhitzte Luft nach unten aus den Kanälen und kann sich Intensiv mit den Scherben vermischen und optimal viel Wärme zum Schmelzen des Eises in die Scherben einbringen. Gleichartige, aber anders eingesetzte Leitungen können oberhalb im Silo angebracht sein: Durch deren nach unten offene dachförmige Kanäle wird die nun abgekühlte Luft wieder aufgefangen und nach außen abgeführt, wie nachfolgend erläutert:
Wenn gemäß einer vorteilhaften Ausgestaltung oberhalb der Zuleitung eine Ableitung Im Silo verläuft, welche nach unten hin geöffnet ist und durch welche die den im Silo befindlichen Scherben durch die Zuleitung zugeführte Luft aus diese Scherben entweichen kann, reduziert sich der notwendige Druck, mit dem der Ventilator die erwärmte Luft in das Scherben -Wasser-Eis-Gemisch einblasen muss, Versuche haben ergeben, dass vorzugsweise die Ableitung 0,2 - 2 m, vorzugsweise insbesondere 0,2 - 1 m oberhalb der bzw. entfernt von Zuleitung angeordnet sein sollte. Eine Ableitung ist jede Maßnahme, die geeignet ist, die unter Druck stehende erwärmte Luft aus dem Silo abzuführen.

Auf eine solche Ableitung könnte theoretisch nur dann verzichtet werden, wenn die Zuleitung dicht unterhalb des üblichen Füllstandes der Scherben im Silo angeordnet ist. Daher ist vorzugsweise die Zuleitung 0,2 - 2 m , vorzugsweise insbesondere 0,2 - 1 m unterhalb des üblichen Füllstandes der Scherben im Silo angeordnet ist.. Allerdings ist angestrebt, stets Ableitungen vorzusehen, damit die durch die Scherben geleitete Luft gezielt abgeführt werden kann, z. B. durch Filter, evtl. zusammen mit dem Rauchgas. Dabei ist dafür Sorge zu tragen, dass stets eine ausreichende Überdeckung mit Scherben oberhalb der obersten Ableitung vorliegt.

Vorzugsweise wird vorgeschlagen, in die beiden letztgenannte Anordnungen zu kombinieren, wodurch sich auch sehr hoch geschichtete Scherben -Wasser-Eis-Gemische in hohen Vorratssilos erwärmen lassen. Im unteren Bereich, das heißt weit unter dem üblichen Füllstand des Silos, wird oberhalb der Zuleitung eine Ableitung im Silo angeordnet, welche noch unten hin geöffnet ist und durch welche die der 1 Silo befindlichen Scherben durch die Zuleitung zugeführte Luft aus diesen Scherben entweichen kann, wobei vorzugsweise die Ableitung 0,2 - 2 m , vorzugsweise insbesondere 0,2 - 1 m oberhalb der Zuleitung im Silo angeordnet ist. Darüber hinaus wird eine zweite Zuieltung oberhalb der Ableitung und vorzugsweise 0,2 - 2m , vorzugsweise insbesondere 0,2 - 1 m unterhalb des üblichen Füllstandes der Scherben im Silo angeordnet, Vorzugsweise ist die zweite Zuleitung mit einem Druckkontrollsystem ausgestattet, so dass diese abgeschaltet wird, sobald der Druck zu gering wird, z. B. weil die zweite Zuleitung oberhalb des tatsächlichen Bestandes liegt. Mit dieser Konstruktion lassen sich auch sehr hohe Vorraissilos realisieren, da mehrere Paare bestehend aus Zuleitung und Ableltung über einander angeordnet werden können. Zuleitungen und Ableitungen können natürlich auch gitterartig angeordnet sein, wobei das Zuleitungsgltter auch verdreht, insbesondere um 90°, zum Ableitungsgitter angeordnet sein kann.

Eine weitere Energiequelle, die bisher nicht genutzt wurde, stellt das Abgas dar, das die Anlage nach Einlegegutvorwärmer und/oder Elektrofilter ungenutzt verlässt. Vorzugsweise wird auch diese Energie genutzt, da sie insbesondere mit höheren Temperaturen zur Verfügung steht.

Die warme Luft oberhalb der Glasschmelzwanne wird wie oben beschrieben mittels einer geeigneten Vorrichtung durch ein Gebläse abgesaugt und mittels eines Wärmeaustauschers durch das Abgas weiter aufgeheizt. Mit der so erhitzten Luft wird mittels eines geeigneten Wärmeaustauschers (offenes oder geschlossenes System) innerhalb des Scherbensilos das Eis geschmolzen. Das entstehende Wasser läuft innerhalb der Scherben nach unten und wird am Silofuß mittels einer geeigneten Vorrichtung ausgeschleust. Die abgekühlte Luft wird in die Umgebung abgelassen oder wird mittels einer Leitung einem Filter zugeführt.

Die Scherben werden dann ohne Eis, nur mit einem geringen Restfeuchteanteil den Einlegern direkt, bzw. dem Einlegegutvorwärmer zugeführt.

In einer alternativen Ausgestaltung umfasst die Enteisungsvorrichtung Zuleitungen, deren Ausblasöffnungen in das Innere des Silos weisen, wobei die Ausblasöffnungen am Rand des Silos angeordnet sind oder in das Silo ragen. Es wird daher die heiße Luft von der Seite in das Silo eingedrückt und nicht durch dieses in nach unten offenen Leitungen durchgeführt, wie bei der obigen Ausführung.

Vorzugsweise sind die Ausblasöffnungen ringartig um das Silo herum angeordnet, in einem geeigneten Abstand zueinander. Die Abstände ermittelt der Fachmann je nach Auslegung des Silos zur Erreichung des erfindungsgemäßen Ziels.

\/orzugsweise sind die Ausblasöffnungen in mehreren Etagen über die Höhe des Silos angeordnet, damit eine ausreichende Durchlüftung möglich ist. Auch hier ermittelt der Fachmann je nach Auslegung des Silos zur Erreichung des erfindungsgemäßen Ziels die geeigneten vertikalen Abstände.

Hierbei ist vorzugsweise eine Ableitung zum Ansaugen der zugeführten heißen Luft vorgesehen, welche im Silo von unten nach oben im Silo verläuft. Diese weist Öffnungen auf durch welche die den im Silo befindlichen Scherben durch die Zuleltung zugeführte Luft aus diesen Scherben entweichen kann. In Versuchen hat sich gezeigt, dass diese Öffnungen der Ableitung 0,2 - 2 m, vorzugsweise insbesondere 0,2 - 1 m von der Ausblasöffnungen der Zuleitung beabstandet sind. Insbesondere sind die Ausblasöffnungen rotationssymmetrisch zur Ableitung angeordnet.

Vorzugsweise haben die Öffnungen der Ableitung ein in von der Ableitung wegweisendes Dach, damit ein Hereinfallen von Glaspartikeln/Scherben in die Ableitung erschwert wird.

Vorzugsweise ist das untere Ende der Ableitung offen und endet im Silo, damit versehentlich durch die Öffnungen eingesaugte Glaspartikel/Scherben nach unten hin bei sinkendem Füllstand des Silos die Ableitung nach unten verlassen können.

Weitere Vorteile ergeben sich aus der folgenden Beschreibung und den beigefügten Figuren, Ebenso können die vorstehend genannten und noch weiter ausgeführten Merkmale erfindungsgemäß jeweils einzeln oder in beliebigen Kombinationen miteinander verwendet werden. Die erwähnten Ausführungsbeispiele sind nicht abschließend zu verstehen und haben beispielhaften Charakter.

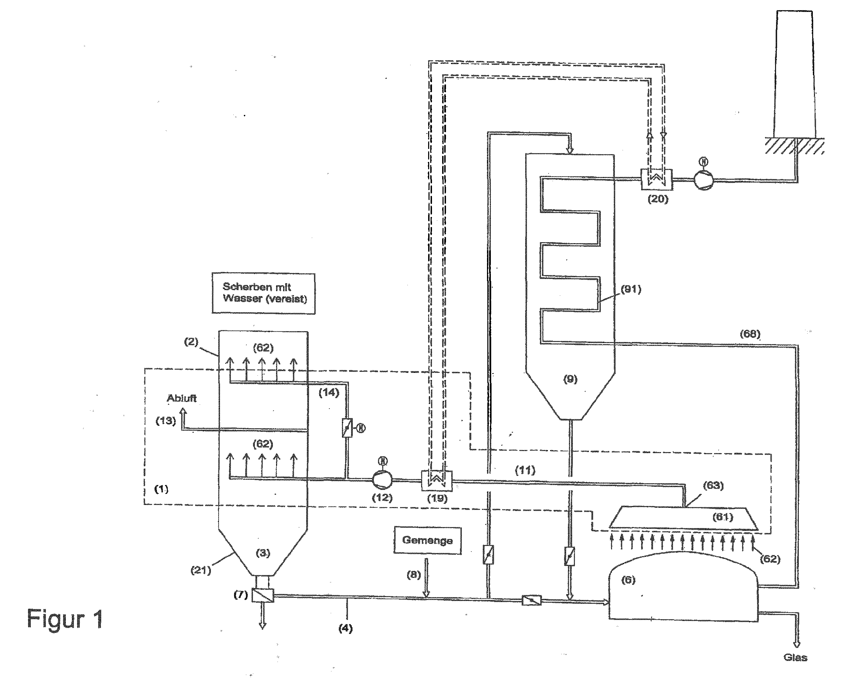

Fig. 1 zeigt schematisch einen Glasofen mit der erfindungsgemäßen Enteisungsvorrichtung ohne Darstellung des Feuerungssystems. Der abgebildete Glasofen umfasst ein Vorratssilo 2, in welchem das zu schmelzende Glas 3, insbesondere Scherben bzw. Altglas etc. bereitgestellt wird. Dieses wird üblicherweise mittels Radlader oder Elevator in das Silo 2 bzw. eine bunkerartiges Silo befördert. Das Silo 2 verjüngt sich nach unter zum Fußbereich 21 trichterartig und mündet in einer Fördereinrichtung 4 für die Scherben. Im Fußbereich 21 des Silos 2 befindet sich ferner ein Wasserabscheider 7, z. B. in Gestalt eines geneigten Gitters, weiches das Abfließen von mit dem Glas geführter Feuchtigkeit, z. B. Niederschläge, Schmetz- oder Schwitzwasser ermöglicht,

Gegebenenfalls werden dem aus dem Silo 2 kommenden Scherbenstrom 3 auch weitere Glasgemenge 8 zugeführt, der auch Frischgias aufweisen kann. Der Glasgemengestrom, welcher in der Regel Umgebungstemperatur aufweist, durchläuft sodann - optional und zuschaltbar - einen Vorwärmer 9, der den Glasgemengestrom auf Temperaturen von ca. 300° C erwärmt. Dies geschieht mittels eines Wärmetauschers 91 im Vorwärmer 9, der die In den Rauchgasen 68 mitgeführte Warme nutzt, was somit den Energiebedarf beim Schmelzen des Glases senkt, Ferner werden thermische Spannungen Eintritt in die sich anschließende Glasschmelzwanne 6 vermieden, welche sich bei der Zufuhr des vergleichsweise kalten Glases ergeben könnten. Der vorgewärmte Glasgemengestrom gelangt mittels des sogenannten Einlegers in die Glasschmelzwanne 6, wird dort aufgeschmolzen und anschließend weiterverarbeitet, was allerdings nicht der Fig. 1 und der Erfindung ist.

Die Luft 62 im Raum 61, welcher hier nur oberhalb der Glasschmelzwanne 6 dargestellt ist, erwärmt sich in der Regel auf Temperaturen um die 80° C. Durch Konvektion ergibt sich eine Luftzirkulation von unten nach oben in dem die Glasschmelzwanne 6 umgebenden Raum 61. Die ca. 80° C heiße Luft 62 strömt beim Stand der Technik ungenutzt durch eine Dachöffnung in die Umgebung.

Erfindungsgemäß ist nun vorgesehen, diese Abluft 62 zur Erwärmung bzw. Enteisung des im Vorratssilo bereitgehaltenen Glases, üblicherweise Scherben/Altglas, einzusetzen, Dazu wird die erwärmte Luft 62 aus dem Raum 61 oberhalb der Glasschmelzwanne 6 durch eine Art Abzugshaube 64 gesammelt und über Öffnung 63 durch die erfindungsgemäße Enteisungsvorrichtung 1 in das Innere des mit Scherben 3 gefüllten Silos 2 geführt. Das Rohrleitungssystem 11 verbindet also den Raum 61 oberhalb des Daches der Glasschmelzwanne mit dem Inneren des Silos 2 und fördert vorzugsweise mittels eines druckerhöhenden Ventilators 12 die heiße Abluft 62 in das Glas 3, Dabei wird das Glas 3 im Silo erwärmt, das anhaftende Wasser ebenfalls erwärmt oder verdunstet und ggf, gefrorenes anhaftendes Wasser zumindest aufgetaut, erhitzt und eventuell verdunstet/sublimiert, Die heiße Luft 62 gelangt durch nicht näher dargestellte Öffnungen aus der im Inneren des Silos 2 und unterhalb des üblichen Füllstandes 31 des Glases 3 befindlichen Luftleitung 11. In geeignetem Abstand oberhalb der Aufbiasöffnungen befindet sich ein daran angepasstes Endlüftungsrohr 13, durch welches die etwas weiter unten eingeblasene Heißluft 62 wieder entweichen kann.

Beispielartig ist hier oberhalb des Entlüftungsrohres eine separat schaltbare weitere Luftleitung 14 abgebildet, welche sich ausreichend dicht unter dem üblichen Füllstand befindet um kein Entlüftungsrohr zu benötigen, Die Luft tritt einfoch aus der Oberfläche 31 der Scherbenanhdufung aus.

An dem Entelsungsleitungssystem 11 ist ein weiterer Wärmetauscher 19 vorgesehen, mit dem eine zusätzliche Zufuhr von Wärme zum Luftstrom 62 erfolgen kann, z. B. durch Nutzung der in den Rauchgasen der Beteuerung der Glasschmelzwanne enthaltenen Restwärme. Die Rauchgasleitung kann daher als Wärmetauscher 91 zuerst durch den Einlegegutwärmer 9 und dann durch den weiteren Wärmetauscher 20 des Enteisungssystems 11 geführt sein. Alternativ kann die Nutzung der im Luftstrom 62 enthaltenen Wärme auch für andere Zwecke erfolgen.

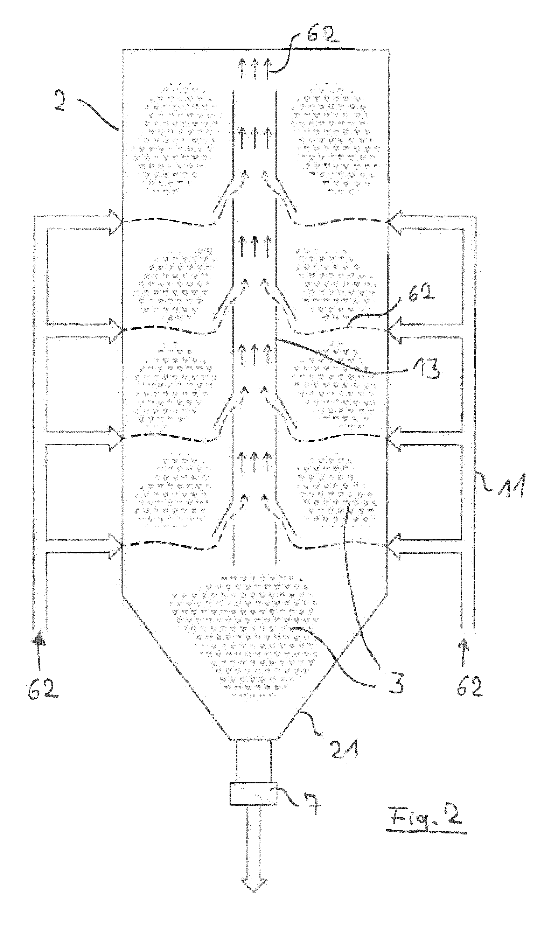

Fig. 2 zeigt das Silo 2 aus Fig. 1 in einer alternativen Ausgestaltung in Bezug auf die Führung der Zuleitungen 11, Ausblasöffnungen und Ableitung 13. Die Zuleitungen 11 haben Ausblasöffnungen, die in das Innere des Silos 2 weisen. Dabei sind die Ausblasöffnungen am Rand des Silos 2 angeordnet und drücken die heiße Luft 62 von der Seite in das Silo und durch die darin befindlichen Scherben 3, welche vorliegend nur abschnittsweise dargestellt sind. Die Ausblasöffnungen sind in mehreren Etagen über die Höhe des Silos verteilt angeordnet.

Im Zentrum des Silos 2 ist eine Ableitung 13 zum Ansaugen der durch die Ausblasöffnungen zugeführten und durch das Scherbengemenge 3 geführten heißen Luft 62 vorgesehen, welche im Silo von unten nach oben im Silo verläuft. Die Ableitung hat dazu Öffnungen. Vorliegend sind die Ausblasöffnungen rotationssymmetrisch zur Ableitung 13 angeordnet.

Die Öffnungen der Ableitung 13 weisen ein in von der Ableitung wegweisendes Dach auf, damit ein Hereinfallen von Glaspartikeln/Scherben in die Ableitung 13 erschwert wird Das untere Ende der Ableitung ist aber offen und endet im Silo, damit eingesaugte Glaspartikel nach unten hin die Ableitung verlassen können.

## Patentansprüche

1. Enteisungsvorrichtung (1) für ein Silo (2) für Scherben (3), dessen Fußbereich (21) mit einer Glasfördereinrichtung (4) zum Zuführen der im Fußbereich befindlichem Scherben zu einer Glasschmelzwanne (6) verbunden ist,
**daduchgekennzeichnet, dass**
die Enteisungsvorrichtung (1) derart ausgestaltet ist, dass sie einen Raum (61) angrenzend an die Glasschmelzwanne (6), insbesondere oberhalb oder seitlich von der Glasschmelzwanne (6), mit dem Silo (2) für Scherben verbinden kann, derart, dass die an die Glasschmelzwanne angrenzend, insbesondere oberhalb oder seitlich der Glasschmelzwanne befindliche erwärmte Luft (62) in das Silo zwischen die Scherben (3) mit dem anhaftenden, insbesondere gefrorenen, Wasser geleitet werden kann, um dieses Wasser zu erwärmten, insbesondere teilweise oder vollständig zu schmelzen.

2. Enteisungsvorrichtung nach Anspruch 1, **dadurch gekennzeichnet, dass** die Enteisungsvorrichtung (1) derart ausgebildet ist, dass sie mit einem Luftauslass (63) im Dach einer Abzugshaube des Raumes (61), welche oberhalb der Glasschmelzwanne mit darin befindlichen geschmolzenen Glas angeordnet ist, verbunden werden kann.

3. Glasschmelzofen mit einer Glasschmelzwanne (6) zum Schmelzen von Scherben (3), einem Silo für die Scherben, dessen Fußbereich (21) mit einer Glasfördereinrichtung (4), Insbesondere mit einem Vorwärmer (19), zum Zuführen der im Fußbereich befindlichen Scherben zu der Glasschmelzwanne verbunden ist, wobei vorzugsweise der Fußbereich einen Wasserseparator (7) zum Abführen von mit den Scherben dem Silo zugeführtem Wasser von den der Glasschmelzwanne zugeführten Scherben aufweist, wobei das Silo eine Enteisungseinrichtung (1) zum Erwärmen, Insbesonders Auftauen, von an den Scherben im Silo anhaftenden Wasser, insbesondere gefrorenem Wasser aufweist, **gekennzeichnet durch** die Enteisungsvorrichtung nach Anspruch 1 oder 2.

4. Ofen oder Vorrichtung nach einem der vorherigen Ansprüche,
**dadurch gekennzeichnet, dass** die Enteisungsvorrichtung einen Ventilator umfasst, mittels welchem die durch die Enteisungsvorrichtung geleitete erwärmte Luff in den Silo zwischen die darin befindliche Scherben mit dem anhaftenden Wasser gedrückt werden kann.

5. Ofen oder Vorrichtung nach einem der vorherigen Ansprüche,
**dadurch gekennzeichnet, dass** die Enteisungsvorrichtung einen Wärmetauscher umfasst, mittels welchem die durch die Enteisungsvorrichtung geleitete Luft gekühlt oder zusätzlich erwärmt werden kann.

6. Ofen oder Vorrichtung nach einem der vorherigen Ansprüche,
**dadurch gekennzeichnet, dass** die Enteisungsvorrichtung mit dem Raum (61) verbundene oder verbindbare Zuleitungen umfasst, deren Ausblasöffnungen in das Innere des Silos weisen, wobei die Zuleitungen insbesondere am Rand des Silos angeordnet sind, in das Silo ragen oder quer durch das Silo verlaufen, wobei ferner vorzugsweise die Zuleitungen im Inneren des Silos im wesentlichen horizontal verlaufen.

7. Ofen oder Vorrichtung nach einem der vorherigen Ansprüche,
**dadurch gekennzeichnet, dass** die Zuleitungen mit den Ausblasöffnungen oberhalb des Raumes (61) angeordnet sind.

8. Ofen oder Vorrichtung nach einem der vorherigen Ansprüche,
**dadurch gekennzeichnet, dass** die Ausblasöffnungen in den Zuleitungen als Düsen, Schlitze, insbesondere nach unten weisend, ausgebildet sind oder die Zuleitungen als nach unten offenes dachartiges Profil ausgebildet sind, welches zusammen mit den im Silo befindlichen Scherben eine teilweise druckdichte Führung für die erwärmte Luft bilden kann, aus welcher ein Teil der erwärmten Luft in die im Silo befindlichen Scherben strömen kann.

9. Ofen oder Vorrichtung nach einem der vorherigen Ansprüche,
**dadurch gekennzeichnet, dass** oberhalb der Zuleitung eine Ableitung im Silo verläuft, welche nach unten hin geöffnet ist und durch welche die den im Silo befindlichen Scherben durch die Zuleitung zugeführte Luft aus diesen Scherben entweichen kann, wobei vorzugsweise die Ableitung 0,2 - 2 m, vorzugsweise insbesondere 0,2 - 1 m oberhalb der Zuleitung sowie unterhalb des üblichen Füllstandes der Scherben im Silo angeordnet ist

10. Ofen oder Vorrichtung nach einem der vorherigen Ansprüche,
**dadurch gekennzeichnet, dass** die Zuleitung 0,2 - 2 m, vorzugsweise insbesondere 0,2 - 1 m unterhalb des üblichen Füllstandes der Scherben im Silo angeordnet ist.

11. Ofen oder Vorrichtung nach einem der vorherigen Ansprüche,
**dadurch gekennzeichnet, dass** oberhalb der Zuleitung eine Ableitung im Silo verläuft, welche noch unten hin geöffnet ist und durch welche die den im Silo befindlichen Scherben durch die Zuleitung zugeführte Luft aus diesen Scherben entweichen kann, wobei vorzugsweise die Ableitung 0,2 - 2 m, vorzugsweise insbesondere 0,2 - 1 m oberhalb der Zuleitung im Silo angeordnet ist und eine zweite Zuleitung oberhalb der Ableitung und vorzugsweise 0,2 - 2 m, vorzugsweise insbesondere 0,2 - 1 m unterhalb des üblichen Füllstandes des Altglases im Silo angeordnet ist,

12. Ofen oder Vorrichtung nach einem der vorherigen Ansprüche,
**dadurch gekennzeichnet, dass** die Enteisungsvorrichtung mit dem Raum (61) verbundene oder verbindbare Zuleitungen (11) umfasst, deren Ausblasöffnungen in das Innere des Silos weisen, wobei die Ausblasöffnungen am Rand des Silos angeordnet sind oder in das Silo ragen.

13. Ofen oder Vorrichtung nach einem der vorherigen Ansprüche,
**dadurch gekennzeichnet, dass** die Ausblasöffnungen ringartig um das Silo herum angeordnet sind.

14. Ofen oder Vorrichtung nach einem der vorherigen Ansprüche,
**dadurch gekennzeichnet, dass** die Ausblasöffnungen in mehreren Etagen über die Höhe des Silos angeordnet sind.

15. Ofen oder Vorrichtung nach einem der vorherigen Ansprüche,
**dadurch gekennzeichnet, dass** eine Ableitung (13) im Silo verläuft, welche von unten nach oben im Silo, insbesondere im Zentrum des Silos verläuft und welche Öffnungen aufweist durch welche die den im Silo befindlichen Scherben durch die Zuleitung zugeführte Luft aus diesen Scherben entweichen kann, wobei vorzugsweise die Öffnungen der Ableitung 0,2 - 2 m, vorzugsweise insbesondere 0,2 - 1 m von den Ausblasöffnungen beabstandet sind.
